# EUROPEAN PATENT SPECIFICATION

(11) **EP 1 828 657 B1**
(45) Date of publication and mention of the grant of the patent: **07.03.2012**
(21) Application number: 05823876.7
(22) Date of filing: 19.12.2005
(51) Int. Cl.: F16L 11/127, B60K 15/01

(54) **POLYAMIDE-BASED MULTILAYER TUBE FOR TRANSFERRING FLUIDS**
MEHRLAGIGES ROHR AUF POLYAMIDBASIS ZUR ÜBERTRAGUNG VON FLUIDEN
TUBE MULTICOUCHE A BASE DE POLYAMIDE POUR LE TRANSFERT DE FLUIDES

(30) Priority: 21.12.2004 FR 0413633; 26.01.2005 US 647280 P
(43) Date of publication of application: 05.09.2007
(73) Proprietor: ARKEMA FRANCE, 92700 Colombes (FR)
(72) Inventor: BELLET, Gaëlle, F-27000 Evreux (FR); AMOUROUX, Nicolas, Teramachi-dori, Hirokoji agaru Kamigyo ku, Kyoto (JP); PERY, Frédérique, F-27410 Grandchain (FR)
(74) Representative: Delprat, Corinne
(86) International application number: PCT/EP2005/013928
(87) International publication number: WO 2006/066944

(56) References cited:
- EP-A- 1 496 299
- US-A- 5 219 003
- US-A1- 2002 012 806
- US-A1- 2003 124 288

## Description

### Field of the invention

The present invention relates to polyamide-based tubes for transferring fluids.

As an example of tubes for transferring fluids, mention may be made of tubes for petrol, and in particular for conveying petrol from the tank to the engine of motor vehicles. As other examples of transfer of fluids, mention may be made of the fluids used in fuel cells, CO₂-based systems for cooling and conditioned air, hydraulic systems, cooling circuits, conditioned air and medium-pressure power transfer systems. The invention also relates to air brake hoses for compressed air. They are useful for delivering compressed air to equipment, machine tools, various devices and also for brake circuits in high-power vehicles.

For safety and environmental protection reasons, motor-vehicle manufacturers require these tubes to have both mechanical properties such as burst strength and flexibility along with good cold temperature (-40°C) impact resistance as well as good high-temperature (125°C) strength, and also very low permeability to hydrocarbons and to their additives, particularly alcohols such as methanol and ethanol. These tubes must also have good resistance to the fuels and lubrication oils for the engine. These tubes are manufactured by coextruding the various layers using standard techniques for thermoplastics.

The invention is particularly useful for transporting petrol.

### [Prior art and technical problem]

Among the characteristics of the specification for these petrol tubes, five are particularly difficult to obtain jointly in a simple manner:
- cold temperature (-40°C) impact resistance - the tube does not break;
- fuel resistance;
- high-temperature (125°C) strength;
- very low permeability to petrol;
- good dimensional stability of the tube in use with the petrol.
In multilayer tubes of various structures, the cold temperature impact strength remains unpredictable before having carried out the standardized tests for cold temperature impact strength.

Polyamides and EVOH based tubes for petrol transfer are known from Patent Application EP 0 731 308 or EP 1 314 758, EP 1 496 299. These tubes may have a four-layer structure comprising, respectively, a PA 12 outer layer, a tie layer, which is a grafted polyolefin, an EVOH layer and an inner layer in contact with the petrol, comprising a blend of a polyamide and a polyolefin having a polyamide matrix.

Patent EP 428 833 discloses a three-layer tube comprising, respectively, a PA 12 outer layer, a tie layer which is a grafted polyolefin and an EVOH inner layer in contact with the petrol.

Patents EP 428 834 and EP 470 606 disclose a five-layer tube comprising, respectively, a PA 12 outer layer, a tie layer which is a grafted polyolefin, a PA 6 layer, an EVOH layer and a PA 6 inner layer in contact with the petrol.

Patent US 5 038 833 discloses a three-layer tube comprising, respectively, a PA 12 outer layer, an EVOH layer and a PA 12 inner layer in contact with the petrol.

Patent Application EP 1 036 967 describes a polyamide based multilayer tube comprising, in its radial direction from the inside outwards:
- an inner layer made of a polyamide or of a polyamide-polyolefin blend with a polyamide matrix. This inner layer contains a dispersed electrically conducting carbon black filler producing a surface resistivity of less than 106 Ω.
- an intermediary layer made of a polyamide or of a polyamide-polyolefin blend with a polyamide matrix. This layer does not contain any electrically conducting carbon black or any significantly electrically conducting quantity of carbon black.
- a tie layer,
- an outer layer of polyamide,
the layers being successive and adhering to one another in their respective contact zones.

Patent Application EP 1 036 968 describes a polyamide based multilayer tube comprising, in its radial direction from the inside outwards:
- a first layer (1) made of a compound of a polyamide P₁ and a polyolefin PO₁ with a polyamide matrix or of a first layer made of a polyamide P₁,
- a layer (2 bis) made of EVOH,
- a layer (2) made of a copolyamide,
- a layer (3) made of a polyamide P₃,
P₁ and P₃ can be identical or different, layers (1), (2 bis), (2) and (3) being successive and adhering to one another in their respective contact zones.

Patent EP 1 162 061 describes a multilayer tube comprising, in its radial direction from the inside outwards:
- a layer made of PA 6,
- a layer made of EVOH,
- a layer made of either a copolyamide 6/12 having from 55% to 80% by weight of caprolactam, or a polyamide 6.10 or 6.12, or also a blend of PA 6 and PA 12,
- a layer made of PA 12,

Patent Application EP 1 331 091 describes a polyamides based tube comprising:
- a first inner layer (1) made of a blend of a polyamide P₁ and a polyolefin PO₁ with a polyamide matrix P₁,
- optionally a layer (2 bis) made of EVOH,
- a layer (2) made of a blend of copolyamides 6/12, one containing by weight more 6 units than 12 units and the other containing more 12 units than 6 units,
- an outer layer (3) made of a polyamide P₃,
P₁ and P₃ can be identical or different, layers (1), (2 bis), (2) and (3) being successive and adhering to one another in their respective contact zones.

Patent EP 1 243 831 discloses a tube for transferring fluids, in particular petrol. It comprises, respectively, a polyamide outer layer, a copolyamide tie layer, an EVOH layer, another copolyamide tie layer and a polyamide inner layer in contact with the petrol.

It has now been found that, in the above tubes comprising from the outside inwards, a polyamide layer, a tie layer, optionally an EVOH layer and one or several other layers submitted to impacts or other similar mechanical stresses, cracks could appear and propagate throughout the structure. Adhesion problems at the interfaces with the tie layer were also discovered in the very same tubes after aging.

It was discovered that if the tie layer between the polyamide layer and the eventual EVOH layer was modified by adding to it enough of a quantity of impact modifier, then, during the impact, there could be crack initiation in the EVOH layer but the crack would stop at the interface between the EVOH layer and the impact modified tie layer. This makes the structure resistant to impacts. It was also found that the impact modifier addition in the tie layer helps to improve the adhesion between the layers when measured after aging in air.

### [Brief description of the invention]

The present invention relates to a multilayer tube comprising, in its radial direction from the outside inwards:
an outer layer (1) made of polyamide,
a tie layer (2) comprising by weight:
   1 to 50% of an impact modifier chosen from elastomers and very low density polyethylenes, the said impact modifier being completely or partly
   functionalized, per 99 to at least 50% of a copolyamide 6/12 respectively, optionally an EVOH layer (3),
optionally a tie layer (if there is no layer (3), this eventual tie layer is not used) an inner layer (4) made of PA 12, PA 6 or a PA 6-polyolefin compound with a PA 6 matrix and a dispersed polyolefin phase,
the layers being successive and adhering to one another in their respective contact zones. The inner layer is the layer in contact with the fluid to be transferred.

According to one embodiment of the invention, the inner layer (4) contains an electrically conducting material, producing a surface resistivity of less than 10⁶ Ω.

According to another embodiment of the invention, the inner layer (4) contains essentially no electrically conducting material and the tube includes a layer (4a) that adheres to the layer (4), this layer is made of polyamide and contains additionally an electrically conducting material producing a surface resistivity of less than 10⁶ Ω. This layer (4a) becomes the inner layer.

The layer (4) or (4a) or the layers (4) and (4a) can contain a plasticizer. Plasticizers, by way of example are described in a further paragraphe. Advantageously it is BBSA. Advantageously proportion is 6 to 10% by weight (preferably 8%) of all the components of said layer (not including the conductive material if any).

These tubes may have an outside diameter of 6 to 110 mm and a thickness of around 0.5 to 5 mm.

Advantageously, the tube for petrol according to the invention has an outside diameter ranging from 6 to 12 mm and a total thickness of 0.8 mm to 2.5 mm. The outer layer (1) thickness represents 25 to 60% of the tube total thickness.

The tube of the present invention has a very low permeability to petrol, particularly to hydrocarbons and to their additives, particularly alcohols such as methanol and ethanol, or else ethers such as MTBE or ETBE. These tubes also exhibit good resistance to fuel and lubrication oils for the engine.

This tube exhibits very good mechanical properties at low or high temperature.

The invention also relates to the use of these tubes for transporting petrol.

### [Detailed description of the invention]

**As regards the polyamide of the outer layer (1),** mention may be made of PA 11 and PA 12.

Mention may also be made of those with formulation X.Y/Z or 6.Y2/Z in which:
- X results from the condensation of an aliphatic diamine having 6 to 10 carbon atoms,
- Y results from the condensation of an aliphatic carboxylic diacid having 10 to 14 carbon atoms,
- Y2 results from the condensation of an aliphatic carboxylic diacid having 15 to 20 carbon atoms,
- Z results from the condensation of at least one monomer among lactam, or alpha omega-amino carboxylic acid, the unit X1.Y1 in which X1 results from the condensation of an aliphatic diamine and Y1 results from the condensation of an aliphatic carboxylic diacid,
- the weight ratios z/(X+Y+Z) and Z/(6+Y2+Z) being comprised between 0 and 15%. Mention can be made of PA 6.10 (polymer resulting from the condensation of hexamethylene diamine and sebacic acid), PA 6.12 (polymer resulting from the condensation of hexamethylene diamine and dodecanedioic acid), PA-6,14 (having hexamethylenediamine and C14 acid units), PA-6,18 (having hexamethylenediamine and C18 acid units) and PA 10.10 (polymer resulting from the condensation of 1,10-decanediamine and sebacic acid).

Mention can also be made of polyamide with formulations X/Y,Ar in which:
- Y results from the condensation of an aliphatic diamine having 8 to 20 carbon atoms,
- Ar results from the condensation of an aromatic carboxylic diacid,
- X results from the condensation either of the aminoundecanoic acid NH2-(CH2)10-COOH, or of lactam 12or of the aminoacid corresponding either to the unit Y,x resulting from the condensation of the diamine with an aliphatic diacid (x) having 8 to 20 carbon atoms or also the unit Y,I resulting from the condensation of the diamine with isophtalic acid,
- X/Y,Ar can mean for instance:
   - 11/10T, which results from the condensation of aminoundecanoic acid, 1,10-decanediamine and terephtalic acid,
   - 12/12T, which results from the condensation of lactam 12, 1,12-dodecanediamine and terephtalic acid
   - 10,10/10,T which results from the condensation of sebacic acid, 1,10-decanediamine and terephtalic acid,
   - 10,I/10,T which results from the condensation of isophtalic acid, 1,10-decanediamine and terephtalic acid.

The inherent viscosity of the polyamide of the outer layer (1) can be chosen between 1 and 2 and advantageously between 1,2 and 1,8. The inherent viscosity is measured at 20°C at a concentration of 5 x 10⁻³g per cm³ in *meta-*cresol. The polyamide of the outer layer (1) can contain 0 to 30 weight percent of at least one product chosen among the plasticizers, impact modifiers per 100 to 70% of polyamide respectively. This polyamide can contain the typical additives such as UV stabilizers, antioxidants, flame retardants, etc....

The polyamide of the outer layer (1) can contain at least one product chosen among the plasticizers, impact modifiers and polyamides A2.

**As regards plasticizers,** these are chosen from benzene sulphonamide derivatives, such as N-butyl benzenesulphonamide (BBSA), ethyl toluene sulphonamide or N-cyclohexyl toluene sulphonamide; esters of hydroxybenzoic acids, such as 2-ethylhexyl-para-hydroxybenzoate and 2-decylhexyl-*para-*hydroxy-benzoate; esters or ethers of tetrahydrofurfuryl alcohol, like oligoethyleneoxytetra-hydrofurfuryl alcohol; esters of citric acid and of hydroxy malonic acid such as oligoethyleneoxy malonate. Mention can also be made of decyl hexyl parahydroxybenzoate and ethyl hexyl parahydroxybenzoate. A particularly preferred plasticizer is N-butyl benzene sulphonamide (BBSA).

**As regards the impact modifier** mention can be made of for instance the polyolefins, the crosslinked polyolefins, EPR, EPDM SBS and SEBS elastomers that can be grafted to facilitate their compatibilization with the polyamide, copolymers made of polyamide blocks and polyether blocks. These copolymers comprising polyamide blocks and polyether blocks are well know and they are also designated under the name PEBA (polyether block amide) and sold by the Applicant under the registered name PEBAX®. Mention can also be made of acrylic elastomers, for instance those of the type NBR, HNBR, X-NBR. The polyolefins useful as impact modifiers are for instance the ethylene/(meth)acrylate/maleic anhydride or ethylene/(meth)acrylate/glycidyl methacrylate terpolymers. They are sold by the Applicant under the registered name Lotader®.

**As regard the polyamide A2**, this is a polyamide which is not identical to the polyamide of layer (1) described above but could be choosen in the same family. Mention may be made of PA 11, PA 6 and PA 12. In a specific embodiment it is a polyamide containing a polycondensation catalyst such as a mineral or organic acid, for instance phosphoric acid. The catalyst can be added to the polyamide after its preparation using any standard procedure or, more simply and this is preferred, be the residual of the catalyst used for the polycondensation. Polymerization and/or depolymerization reactions will be able to occur significantly during the blending of the catalyzed polyamide and the polyamide of the outer layer. The catalyst concentration relative to the amount of catalyzed polyamide can be comprised between 5 ppm and 15000 ppm of phosphoric acid. The quantity of catalyst may be up to 3000 ppm, and advantageously between 50 and 1000 ppm. The quantity of catalyst can reach up to 30000 ppm and advantageously between 50 and 1000 ppm. In the case of other catalysts, for instance boric acid, the quantities will be different and can usually be chosen in a right way depending the usual techniques of polyamide condensation.

The amount of plasticizer can be chosen (by weight) between 0 and 15% (advantageously between 4 and 8%), the impact modifier between 0 and 20% (advantageously between 5 and 15%), the catalyzed polyamide between 0 and 20%, advantageously between 10 and 20% (preferably between 12 and 17%) et the balance to 100% in polyamide of the outer layer.

Advantageously the polyamide of the outer layer is PA 12. If a catalyzed polyamide is added to the polyamide of the outer layer then this catalyzed polyamide is advantageously PA 11.

As regards the preparation of the composition of the outer layer, they can be prepared by blending in the melt stage the constituents using the standard processing techniques characteristic for thermoplastic materials. The outer layer can also contain typical additives used in polyamides such as UV stabilizers, antioxidants, pigments and flame retardants.

**As regard the tie layer (2) and the impact modifier,** firstly some elastomers, mention can be made of SBS, SIS, SEBS blocks copolymers and ethylene /propylene (EPR) or ethylene / propylene / diene (EPDM) elastomers. As for the very low density polyethylenes they can be metallocenes with density for instance chosen between 0.860 and 0.900.

Advantageously ethylene / propylene (EPR) or ethylene / propylene / diene (EPDM) elastomers are used. The functionalization can be carried out by grafting or copolymerizing advantageously with an unsaturated carboxylic acid. It would not be outside the scope of the invention to use a functional derivative of the above acid. Examples of unsaturated carboxylic acid are those having 2 to 20 carbon atoms such as acrylic, methacrylic, maleic, fumaric and itaconic acids. The functional derivatives of those acids comprise, for example, anhydrides, ester derivatives, amide derivatives, imide derivatives and metal salts (such as alkali metal salts) of unsaturated carboxylic acids.

**As regard the tie layer (2) and the copolyamide 6/12,** it is a copolyamide of caprolactam and lauryllactam. The ratios of caprolactam and lauryllactam can vary from 20% to 80% in caprolactam for respectively 80% to 20% of lauryllactam. Advantageously it is a blend of a 6-rich copolyamide 6/12 and of a 12-rich copolyamide 6/12. With regard to the blend of copolyamides 6/12, one comprising by weight more 6 units than 12 units and the other more 12 units than 6 units, the copolyamide 6/12 results from the condensation of caprolactam with lauryllactam. It is clear that "6" denotes units derived from caprolactam and "12" denotes units derived from lauryllactam. It would not be outside the scope of the invention if the caprolactam were to be replaced completely or partly with aminocaproic acid, and likewise the lauryllactam may be replaced with aminododecanoic acid. These copolyamides may include other units, provided that the ratios of the 6 and 12 portions are respected.

Advantageously, the 6-rich copolyamide comprises 50 to 90% by weight of 6 units per 50 to 10% of 12 units, respectively.

Advantageously, the 12-rich copolyamide comprises 50 to 90% by weight of 12 units per 50 to 10% of 6 unit, respectively.

As regards the proportions of the 6-rich copolyamide and of the 12-rich copolyamide, these may be, by weight, from 30/70 to 70/30, and preferably 40/60 to 60/40.

These copolyamides blends may also include up to 30 parts by weight of other grafted polyolefins or (co)polyamides per 100 parts of 6-rich and 12-rich copolyamides.

These copolyamides have a melting point (DIN 53736 B standard) between 60 and 200°C and their relative solution viscosity maybe between 1.3 and 2.2 (DIN 53727 standard, m-cresol solvent, 0.5 g/100 ml concentration, 25°C, Ubbelohde viscometer). Their melt rheology is preferably similar to that of the materials of adjacent layers. These products are manufactured by standard techniques for polyamides. Processes are disclosed in Patents US 4 424 864, US 4 483 975, US 4 774 139, US 5 459 230, US 5 489 667, US 5 750 232 and US 5 254 641.

The ratio of impact modifier is advantageously by weight between 5 to 40% per 95 to 60% of copolyamide or blend of copolyamides respectively. Preferably the ratio of impact modifier is between 5 to 30% per 95 to 70% of copolyamide or blend of copolyamides, respectively.

The tie layer can contain stabilizers.

**As regards the layer (3), the EVOH copolymer** is also referred to as a saponified ethylene-vinyl acetate copolymer. The saponified ethylene-vinyl acetate copolymer to be used according to the present invention is a copolymer with an ethylene content of 20 to 70 mol%, preferably from 25 to 70 mol%, the degree of saponification of its vinyl acetate component not being less than 95 mol%. Among these saponified copolymers, those which have melt flow indices, under hot conditions, in the range from 0.5 to 100 g/10 minutes are particularly useful. Advantageously, the MFI is chosen between 5 and 30 (g/10 min at 230°C under 2.16 kg), "MFI", the abbreviation for "melt flow index" denoting the flow rate in the molten state.

It is understood that this saponified copolymer can contain small proportions of other comonomer ingredients, including α-olefins such as propylene, isobutene, α-octene, α -dodecene, α-octadecene, etc..., unsaturated carboxylic acids or salts thereof, partial alkyl esters, whole alkyl esters, nitriles, amides and anhydrides of the said acids, and unsaturated sulphonic acids or salts thereof.

The EVOH layer can be composed of blends based on EVOH. As regards the mixtures based on EVOH, they are such that the EVOH forms the matrix, i.e. it represents at least 40% by weight of the mixture and preferably at least 50%. The other constituents of the mixture are chosen from polyolefins, polyamides and optionally functional impact modifiers. The impact modifier can be chosen among the elastomers, the copolymers of ethylene and of an olefin containing 4 to 10 carbon atoms (for instance the ethylene - octene copolymers) and the very low density polyethylenes. As example of elastomers mention can be made of EPR and EPDM. EPR (abbreviation for Ethylene Propylene Rubber) are ethylene - propylene elastomers and EPDM are ethylene - propylene - diene monomer elastomers. As example mention can be made of blends containing by weight 50 to 95% of EVOH per 50 to 5% of grafted EPR respectively, advantageously 60 to 95% of EVOH for respectively 40 to 5% of grafted EPR, preferably 75 to 95% of EVOH for respectively 25 to 5% of grafted EPR.

**As example of mixtures based on EVOH,** mention may be made of the compositions comprising (by weight):
- 55 to 99.5 parts of EVOH copolymer,
- 0.5 to 45 parts of polypropylene and of compatibilizer, the proportions thereof being such that the ratio of the amount of polypropylene relative to the amount of compatibilizer is between 1 and 5.

Advantageously, the ratio of the MFI of the EVOH to the MFI of the polypropylene is greater than 5 and preferably between 5 and 25. Advantageously, the MFI of the polypropylene is between 0.5 and 3 (in g/10 min at 230°C under 2.16 kg). According to one advantageous form, the compatibilizer is a polyethylene bearing polyamide grafts and it results from the reaction (i) of a copolymer of ethylene and of a grafted or copolymerized unsaturated monomer X with (ii) a polyamide. The copolymer of ethylene and of a grafted or copolymerized unsaturated monomer X is such that X is copolymerized and it can be chosen from ethylene - maleic anhydride copolymers and ethylene - alkyl (meth)acrylate - maleic anhydride copolymers, these copolymers comprising from 0.2 to 10% by weight of maleic anhydride and from 0 to 40% by weight of alkyl (meth)acrylate.

According to another advantageous form, the compatibilizer is a polypropylene bearing polyamide grafts which results from the reaction (i) of a propylene homopolymers or copolymer comprising a grafted or copolymerized unsaturated monomer X, with (ii) a polyamide. Advantageously, X is grafted. The monomer X is advantageously the anhydride of an unsaturated carboxylic acid such as, for example, maleic anhydride.

**As example of these mixtures based on EVOH,** mention may be made of compositions comprising:
- 50 to 98% by weight of an EVOH copolymer,,
- 1 to 50% by weight of a polyethylene
- 1 to 15% by weight of a compatibilizer consisting of a mixture of an LLDPE or metallocene polyethylene and of a polymer chosen from elastomers, very low density polyethylenes and metallocene polyethylenes, the mixture being co-grafted with an unsaturated carboxylic acid or a functional derivative of this acid.

Advantageously, the compatibilizer is such that the ratio MFI₁₀/MFI₂ is between 5 and 20, in which MFI₂ is the mass melt flow index at 190°C under a load of 2.16kg, measured according to ASTM D1238, and MFI₁₀ is the mass melt flow index at 190°C under a load of 10kg according to ASTM D1238.

**As example of these mixtures based on EVOH,** mention may be made of compositions comprising:
- 50 to 98% by weight of an EVOH copolymer,
- 1 to 50% by weight of an ethylene-alkyl (meth)acrylate copolymer,
- 1 to 15% by weight of a compatibilizer resulting from the reaction (i) of a copolymer of ethylene and of a grafted or copolymerized unsaturated monomer X with (ii) a copolyamide.

Advantageously, the copolymer of ethylene and of a grafted or copolymerized unsaturated monomer X is such that X is copolymerized and it is a copolymer of ethylene and of maleic anhydride or a copolymer of ethylene, of an alkyl (meth)acrylate and of maleic anhydride.

Advantageously, these copolymers comprise from 0.2 to 10% by weight of maleic anhydride and from 0 to 40% by weight of alkyl (meth)acrylate.
**As an example of these mixtures based on EVOH,** mention may be made of compositions comprising:
- 50 to 95% by weight of an EVOH copolymer,
- 5 to 50% by weight of an elastomer optionally fully or partly functional or a blend of a functional elastomer and of another non functional elastomer.

With regard to the inner layer (4), and the PA 12, these are PA 12 typically used in tubes for the automotive industry. It can be modified with plasticizers, impact modifiers and contain stabilizers.

**As regards the inner layer (4),** and the PA 6 and the PA 6-polyolefin compound with a PA 6 matrix and a dispersed polyolefin phase. In the blends PA 6-polyolefin with a PA 6 matrix and a dispersed polyolefin phase, the polyolefin term means homopolymers as well as copolymers, thermoplastics as well as elastomers. They are for instance copolymers of ethylene and an α-olefin. These polyolefins can be any LLDPE, PE, EPR and EPDM. They can be completely or partly functionalized. The dispersed phase can a blend of one or several non-functional polyolefins and one or several functional polyolefins. Advantageously the PA 6 matrix represents 50 to 85 weight percent per 50 to 15% of dispersed phase respectively. Preferably the PA 6 matrix represents 55 to 80 weight percent for respectively 45 to 20% of dispersed phase.
According to a preferred embodiment, the PA 6 - polyolefin blends with a PA 6 matrix comprise, the total adding to 100%:
50 to 90% (advantageously 60 to 80%) of PA 6,
1 to 35% (advantageously 10 to 30%) of HDPE,
1 to 30% (advantageously 5 to 25%) of at least one polymer P1 chosen among the impact modifiers and polyethylenes,
at least one of the HDPE and P1 being completely or partly functionalized.

Advantageously the impact modifier is chosen among the elastomers and very low density polyethylenes.

As regards the impact modifiers and firstly the elastomers, mention can be made of blocks polymers such as SBS, SIS, SEBS and the ethylene/propylene elastomers (EPR) or ethylene / propylene/ diene (EPDM) elastomers. As for the very low density polyethylenes, they can be for instance metallocenes with density for instance between 0.860 and 0.900.

Advantageously an ethylene/propylene elastomers (EPR) or an ethylene /propylene/ diene (EPDM) is used. The functionalization can be carried out by grafting or copolymerization with an unsaturated carboxylic acid. It would not be outside the scope of the invention to use a functional derivative of this acid. Examples of unsaturated carboxylic acids are those having 2 to 20 carbon atoms, such as acrylic, methacrylic, maleic, fumaric and itaconic acids. The functional derivatives of these acids comprise, for example, anhydrides, ester derivatives, amide derivatives, imide derivatives and metal salts (such as alkali metal salts) of unsaturated carboxylic acids.

Unsaturated dicarboxylic acids having 4 to 10 carbon atoms and their functional derivatives, particularly their anhydrides, are particularly preferred grafting monomers. Advantageously maleic anhydride is used.

The proportion of functionalized HDPE and/or functionalized P1 to the total amount of HDPE, functionalized or not, and P1, functionalized or not, can be comprised (by weight) between 1 and 70%, advantageously between 5 and 60% and preferably between 20 and 60%.

The preparation of the PA 6 - polyolefin blends with a PA 6 matrix can be carried out by blendding together the various constituents in the molten state using the standard equipment of the thermoplastic polymer industry.

According to a first embodiment of the PA6 - polyolefin blends with a PA 6 matrix, the HDPE is not grafted and P1 a blend of a grafted elastomer and a non-grafted elastomer.

According to another embodiment of the PA 6 - polyolefin blends with a PA 6 matrix, the HDPE is not grafted and P1 a grafted polyethylene eventually blended with an elastomer.
As an example of P1 mention can also be made of
a blend (A) of at least a high density polyethylene (A1) and at least an ethylene copolymer (A2), the blend of (A1) and (A2) being co-grafted with a monomer such as an unsaturated carboxylic acid or an anhydride of an unsaturated carboxylic acid or the derivatives thereof and the above blend (A) co-grafted having a ratio MI₁₀/MI₂ superior to 18.5.
MI₁₀ is the mass melt flow index at 190°C under a load of 10kg according to ASTM D1238 and MI₂ the index measured using a load of 2.16Kg.
(A2) can be chosen among the EPR, the VLDPE, the ethylene/alkyl (meth)acrylate copolymers or ethylene/alkyl (meth)acrylate/ maleic anhydride copolymers. Advantageously the ratio Mi₁₀ /MI₂ is inferior to 35 and preferably comprised between 22 and 33.
Advantageously the MI₂₀ of the blend (A) of the co-grafted polymers (A1) and (A2) is inferior to 24, MFI₂₀ meaning the mass melt flow index at 190°C under a load of 20kg.

The inner layer can contain some stabilizers.

**As regards the inner layer (4) containing an electrically conducting material,** mention can be made of carbon black, carbon fibers and carbon nanotubes. Advantageously a carbon black chosen among those having a specific surface BET, measured according the ASTM D3037-89 standard, between 5 to 200 m²/g, and an absorption DBP, measured according to ASTM D2414-90, between 50 to 300 ml/100g is used. The black carbon proportion is advantageously comprised by weight between 15 and 30% per 85 to 70% of the other components respectively and preferably between 17 and 23% per 83 to 77% of the other components respectively. Those carbon blacks are described in the patent application WO 99-33908 whose content is included in the present application.

**As regards the inner layer (4a) that adheres to the layer (4),** the layer (4a) is made of polyamide and contains additionally an electrically conducting material producing a surface resistivity of less than 10⁶ Ω. It can be of the same composition than the layer (4) except that it contains an electrically conducting material. It can only be made of PA 12, PA 6 or impact modified PA 6 and can, of course, contain an electrically conducting material. The type of electrically conducting material as well as its proportions are the same that the ones described in the previous paragraph for layer (4). Advantageously the polyamide used in layer (4a) is of the same type as the one used in layer (4), i.e. if the layer (4) is made of PA 12 the layer (4a) is made of PA 12 and if the layer (4a) is made of PA 6 the layer (4a) is made of PA 6. Otherwise it is recommended to use a tie layer between these two layers.

### Examples

All the structures have been extruded on a Mc Neil® multilayer equipment using a line speed of 20m/min. Unless otherwise directed the ratios are in weight percent.

### Structure 1 according to the invention

A 450-micrometer thick outer layer made of plasticized, impact modified and stabilized PA 12,
A 50-micrometer thick tie layer made of:
- 35% of copolyamide 6/12 having 40% of 6 units,
- 55% of copolyamide 6/12 having 70% of 6 units,
- 10% of grafted EPR,
- stabilizers.
A 100-micrometer thick layer of EVOH having 29 molar% of ethylene *(Soarnol® DT2903),*
A 450-micrometer thick layer of a blend having a PA 6 matrix made of:
- 65% of PA 6,
- 25% of HDPE,
- 10% of grafted polyethylene,
- stabilizers.

### Structure 2 according to the invention

A 450-micrometer thick outer layer made of plasticized, impact modified and stabilized PA 12 containing some catalyzed polyamide,
A 50-micrometer thick tie layer made of:
- 45% of copolyamide 6/12 having 40% of 6 units,
- 35% of copolyamide 6/12 having 70% of 6 units,
- 20% of grafted EPR,
- stabilizers.
A 100-micrometer thick layer of EVOH having 29 molar% of ethylene *(Soarnol® DT2903),*
A 450-micrometer thick layer of a blend having a PA 6 matrix made of:
- 70% of PA 6,
- 15% of HDPE,
- 15% of grafted EPR,
- stabilizers.

### Structure 3 according to the invention

A 375-micrometer thick outer layer made of plasticized, impact modified and stabilized PA 12 containing some catalyzed polyamide,
A 50-micrometer thick tie layer made of:
- 40% of copolyamide 6/12 having 40% of 6 units,
- 40% of copolyamide 6/12 having 70% of 6 units,
- 20% of grafted EPR,
- stabilizers.
A 150-micrometer thick layer of EVOH having 32 molar% of ethylene *(Soarnol® DT3203F),*
A 50-micrometer thick tie layer made of:
- 40% of copolyamide 6/12 having 40% of 6 units,
- 40% of copolyamide 6/12 having 70% of 6 units,
- 20% of grafted EPR,
- stabilizers.
A 375-micrometer plasticized, stabilized and impact modified polyamide 12 having a quantity of carbon black sufficient to make it conductive.

### Structure 4 according to the invention

A 450-micrometer thick outer layer made of plasticized, impact modified and stabilized PA 12
A 50-micrometer thick tie layer made of:
- 90% of copolyamide 6/12 having 40% of 6 units,
- 10% of grafted EPR,
- stabilizers.
A 500-micrometer thick layer of a blend having a PA 6 matrix made of:
- 65% of PA 6,
- 25% of HDPE,
- 10% of grafted polyethylene,
- stabilizers.

### Comparative 1

A 450-micrometer thick outer layer made of plasticized, impact modified and stabilized PA 12,
A 50-micrometer thick tie layer made of:
- 40% of copolyamide 6/12 having 40% of 6 units,
- 60% of copolyamide 6/12 having 70% of 6 units,
- stabilizers.
A 100-micrometer thick layer of EVOH having 29 molar% of ethylene *(Soarnol® DC2903),*
A 400-micrometer thick layer of a blend having a PA 6 matrix made of:
- 70% of PA 6,
- 15% of HDPE,
- 15% of grafted polyethylene,
- stabilizers.

Peels tests were carried out using a dynamometer at a speed of 50 mm/min. The quantity in N/cm is the average peel strength measured at the interface with the tie layer.

| | Structure 1 | Structure 2 | Structure 3 | Structure 4 | Comparative 1 |
|---|---|---|---|---|---|
| Initial peel strength in N/cm *(faciès)* | 50 | 55 | 60 | 80 | 55 |
| | *(cohesive)* | *(cohesive)* | *(cohesive)* | *(cohesive)* | *(sticklslip)* |
| Peel strength after 4hrs at 60°C *(faciès)* | 60 | 65 | 70 | 90 | 25 |
| | *(cohesive)* | *(cohesive)* | *(cohesive)* | *(cohesive)* | *(sticklslip)* |

Impact tests have been carried out using the ball testing procedure as described in the Volkswagen TL 524 35 standard. The following table gives the temperature for which 50% of the tubes failed.

| | |
|---|---|
| Structure 2 | -50°C |
| Comparative 1 | -30°C |

## Claims

1. Multilayer tube comprising, in its radial direction from the outside inwards:
- an outer layer (1) made of polyamide,
- a tie layer(2) comprising by weight:
1 to 50% of an impact modifier chosen from elastomers and very low density polyethylene, the said impact modifier being completely or partly functionalized,
per 99 to 50% of a blend of a 6-rich copolyamide 6/12 and of a 12-rich copolyamide 6/12,
- optionally an EVOH layer (3),
- optionally a tie layer,
- an inner layer (4) made of PA 12, PA 6 or a PA 6-polyolefin blend with a PA 6 matrix and a dispersed polyolefin phase,
the layers being successive and adhering to one another in their respective contact zones.

2. Tube according to Claim 1, in which the proportions, by weight, of the 6-rich copolyamide 6/12 and of the 12-rich copolyamide 6/12 are from 30/70 to 70/30, and preferably from 40/60 to 60/40.

3. Tube according to Claim 1 or 2, in which the polyamide of the inner layer (4) contains electrically conducting material.

4. Tube according to Claim 1 or 2, in which the layer (4) essentially does not contain any electrically conducting material and the tube contains an inner layer (4a) that adheres to the layer (4) and contains an electrically conducting material.

5. Tube according to Claim 4, in which the inner layer (4a) is made of polyamide, for example made of PA 12, PA 6 or impact modified PA 6.

6. Tube according to Claim 4 or 5, in which the inner layer (4a) is of the same composition than the layer (4).

7. Tube according to any one of the preceding claims, in which the impact modifier of the tie layer (2) is an EPR grafted with maleic anhydride or an EPDM grafted with maleic anhydride.

8. Tube according to any one of the preceding claims, in which the 6-rich copolyamide 6/12 comprises 50 to 90% by weight of 6 units per 50 to 10% of 12 units, respectively and the 12-rich copolyamide 6/12 comprises 50 to 90% by weight of 12 units per 50 to 10% of 12 units, respectively.

9. Tube according to any one of the preceding claims, in which the proportion of impact modifier is between 5 and 40% per 95 to 60% of the blend of a 6-rich copolyamide 6/12 and of a 12-rich copolyamide 6/12, respectively.

10. Tube according to Claim 9, in which the proportion of impact modifier is between 5 and 30% per 95 to 70% of the blend of a 6-rich copolyamide 6/12 and of a 12-rich copolyamide 6/12, respectively.

11. Tube according to any one of the preceding claims, in which the EVOH layer (3) contains by weight 50 to 95% of EVOH per 50 to 5% of grafted EPR, respectively.

12. Tube according to Claim 11, in which the EVOH layer (3) contains by weight than 60 to 95% of EVOH per 40 to 5% of grafted EPR, respectively.

13. Tube according to Claim 12, in which the EVOH layer (3) contains by weight than 70 to 95% of EVOH per 30 to 5% of grafted EPR, respectively.

14. Tube according to any one of the preceding claims, in which in the layer (4) the polyolefins of the dispersed phase can be LLDPE, PE, EPR, EPDM, completely or partly functionalized.

15. Tube according to any one of Claims 1 to 14, in which the PA 6 matrix represents 50 to 85% by weight per 50 to 15% of dispersed phase, respectively.

16. Tube according to Claim 15, in which the PA 6 matrix represents 55 to 80% by weight per 45 to 20% of dispersed phase, respectively.

17. Tube according to Claim 14, in which the PA 6-polyolefin blends with a PA 6 matrix comprise, the total adding to 100%:
50 to 90% of PA 6,
1 to 35% of HDPE,
1 to 30% of at least one polymer P1 chosen among the impact modifiers and polyethylenes,
at least one of the HDPE and P1 being completely or partly functionalized.

18. Tube according to Claim 17, in which the PA 6-polyolefin blends with a PA 6 matrix comprise, the total adding to 100%:
60 to 80% of PA 6,
10 to 30% of HDPE,
5 to 25% of at least one polymer P1 chosen among the impact modifiers and polyethylenes,
at least one of the HDPE and P1 being completely or partly functionalized.

19. Use of the tubes according to any one of the preceding claims for transporting petrol.

## Patentansprüche

1. Mehrschichtrohr, das in seiner radialen Richtung von außen nach innen Folgendes umfasst:
- eine Außenschicht (1) aus einem Polyamid,
- eine Bindemittelschicht (2), die Folgendes umfasst:
. 1 bis 50 Gew.-% eines Schlagzähigkeitsmodifikators, der aus Elastomeren und Polyethylen sehr niedriger Dichte ausgewählt ist, wobei der Schlagzähigkeitsmodifikator vollständig oder teilweise funktionalisiert ist,
. auf 99 bis 50 Gew.-% einer Mischung eines 6-reichen Copolyamids 6/12 und eines 12-reichen Copolyamids 6/12,
- gegebenenfalls eine EVOH-Schicht (3),
- gegebenenfalls eine Bindemittelschicht,
- eine Innenschicht (4) aus PA 12, PA 6 oder einer PA-6-Polyolefin-Mischung mit einer PA-6-Matrix und einer dispergierten Polyolefinphase,
wobei die Schichten aufeinander folgen und in ihren jeweiligen Kontaktbereichen aneinander haften.

2. Rohr nach Anspruch 1, wobei die Gewichtsanteile des 6-reichen Copolyamids 6/12 und des 12-reichen Copolyamids 6/12 30/70 bis 70/30 und vorzugsweise 40/60 bis 60/40 betragen.

3. Rohr nach Anspruch 1 oder 2, wobei das Polyamid der Innenschicht (4) elektrisch leitendes Material enthält.

4. Rohr nach Anspruch 1 oder 2, wobei die Innenschicht (4) im Wesentlichen kein elektrisch leitendes Material enthält und das Rohr eine Innenschicht (4a) aufweist, die an der Schicht (4) haftet und ein elektrisch leitendes Material enthält.

5. Rohr nach Anspruch 4, wobei die Innenschicht (4a) aus Polyamid, beispielsweise aus PA 12, PA 6 oder schlagzäh modifiziertem PA 6 besteht.

6. Rohr nach Anspruch 4 oder 5, wobei die Innenschicht (4a) die gleiche Zusammensetzung hat wie die Schicht (4).

7. Rohr nach einem der vorhergehenden Ansprüche, wobei es sich bei dem Schlagzähigkeitsmodifikator der Bindemittelschicht (2) um ein mit Maleinsäureanhydrid gepfropftes EPR oder ein mit Maleinsäureanhydrid gepfropftes EPDM handelt.

8. Rohr nach einem der vorhergehenden Ansprüche, wobei das 6-reiche Copolyamid 6/12 50 bis 90 Gew.-% 6-Einheiten auf 50 bis 10% 12-Einheiten umfasst und das 12-reiche Copolyamid 6/12 50 bis 90 Gew.-% 12-Einheiten auf 50 bis 10% 6-Einheiten umfasst.

9. Rohr nach einem der vorhergehenden Ansprüche, wobei der Anteil an Schlagzähigkeitsmodifikator zwischen 5 und 40% auf 95 bis 60% der Mischung eines 6-reichen Copolyamids 6/12 und eines 12-reichen Copolyamids 6/12 liegt.

10. Rohr nach Anspruch 9, wobei der Anteil an Schlagzähigkeitsmodifikator zwischen 5 und 30% auf 95 bis 70% der Mischung eines 6-reichen Copolyamids 6/12 und eines 12-reichen Copolyamids 6/12 liegt.

11. Rohr nach einem der vorhergehenden Ansprüche, wobei die EVOH-Schicht (3) 50 bis 95 Gew.-% EVOH auf 50 bis 5% gepfropften EPR enthält.

12. Rohr nach Anspruch 11, wobei die EVOH-Schicht (3) 60 bis 95 Gew.-% EVOH auf 40 bis 5% gepfropften EPR enthält.

13. Rohr nach Anspruch 12, wobei die EVOH-Schicht (3) 70 bis 95 Gew.-% EVOH auf 30 bis 5% gepfropften EPR enthält.

14. Rohr nach einem der vorhergehenden Ansprüche, wobei es sich in der Schicht (4) bei den Polyolefinen der dispergierten Phase um LLDPE, PE, EPR, EPDM, vollständig oder teilweise funktionalisiert, handeln kann.

15. Rohr nach einem der Ansprüche 1 bis 14, wobei die PA-6-Matrix 50 bis 85 Gew.-% auf 50 bis 15% dispergierte Phase ausmacht.

16. Rohr nach Anspruch 15, wobei die PA-6-Matrix 55 bis 80 Gew.-% auf 45 bis 20% dispergierte Phase ausmacht.

17. Rohr nach Anspruch 14, wobei die PA-6-Polyolefin-Mischungen mit einer PA-6-Matrix Folgendes umfassen, wobei sich die Summe auf 100% beläuft: 50 bis 90% PA 6,
1 bis 35% HDPE,
1 bis 30% mindestens eines Polymers P1, das aus Schlagzähigkeitsmodifikatoren und Polyethylenen ausgewählt ist,
wobei das HDPE und/oder das P1 vollständig oder teilweise funktionalisiert sind.

18. Rohr nach Anspruch 17, wobei die PA-6-Polyolefin-Mischungen mit einer PA-6-Matrix Folgendes umfassen, wobei sich die Summe auf 100% beläuft: 60 bis 80% PA 6,
10 bis 30% HDPE,
5 bis 25% mindestens eines Polymers P1, das aus Schlagzähigkeitsmodifikatoren und Polyethylenen ausgewählt ist,
wobei das HDPE und/oder das P1 vollständig oder teilweise funktionalisiert sind.

19. Verwendung der Rohre nach einem der vorhergehenden Ansprüche zum Transport von Benzin.

## Revendications

1. Tube multicouche comprenant, dans sa direction radiale de l'extérieur vers l'intérieur :
- une couche extérieure (1) en polyamide,
- une couche de liant (2) comprenant, en poids :
. de 1 à 50% d'un modifiant choc choisi parmi les élastomères et les polyéthylènes de très basse densité, ledit modifiant choc étant en tout ou partie fonctionnalisé,
. pour respectivement 99 à 50% d'un mélange d'un copolyamide 6/12 riche en 6 et d'un copolyamide 6/12 riche en 12,
- éventuellement une couche d'EVOH (3),
- éventuellement une couche de liant,
- une couche intérieure (4) en PA 12, en PA 6 ou en un mélange de PA 6 et de polyoléfine à matrice PA 6 et phase dispersée polyoléfine,
les couches étant successives et adhérant entre-elles dans leur zone de contact respective.

2. Tube selon la revendication 1 dans lequel les proportions en poids du copolyamide 6/12 riche en 6 et du copolyamide 6/12 riche en 12 sont de 30/70 à 70/30 et, de préférence, de 40/60 à 60/40.

3. Tube selon la revendication 1 ou 2 dans lequel le polyamide de la couche intérieure (4) contient un matériau électroconducteur.

4. Tube selon la revendication 1 ou 2 dans lequel la couche (4) ne contient essentiellement pas de matériau électroconducteur et le tube comprend une couche intérieure (4a) qui adhère à la couche (4) et contient un matériau électroconducteur.

5. Tube selon la revendication 4 dans lequel la couche intérieure (4a) est en polyamide, par exemple en PA 12, en PA 6 ou en PA 6 modifié choc.

6. Tube selon la revendication 4 ou 5 dans lequel la couche intérieure (4a) a la même composition que la couche (4).

7. Tube selon l'une quelconque des revendications précédentes dans lequel le modifiant choc de la couche de liant (2) est un EPR greffé par l'anhydride maléique ou un EPDM greffé par l'anhydride maléique.

8. Tube selon l'une quelconque des revendications précédentes dans lequel le copolyamide 6/12 riche en 6 comprend de 50 à 90% en poids de motifs 6 pour respectivement 50 à 10% de motifs 12 et le copolyamide 6/12 riche en 12 comprend de 50 à 90% en poids de motifs 12 pour respectivement 50 à 10% de motifs 6.

9. Tube selon l'une quelconque des revendications précédentes dans lequel la proportion de modifiant choc est de 5 à 40% pour respectivement 95 à 60% du mélange d'un copolyamide 6/12 riche en 6 et d'un copolyamide 6/12 riche en 12.

10. Tube selon la revendication 9 dans lequel la proportion de modifiant choc est de 5 à 30% pour respectivement 95 à 70% du mélange d'un copolyamide 6/12 riche en 6 et d'un copolyamide 6/12 riche en 12.

11. Tube selon l'une quelconque des revendications précédentes dans lequel la couche d'EVOH (3) comprend en poids de 50 à 95% d'EVOH pour respectivement 50 à 5% d'EPR greffé.

12. Tube selon la revendication 11 dans lequel la couche d'EVOH (3) comprend en poids de 60 à 95% d'EVOH pour respectivement 40 à 5% d'EPR greffé.

13. Tube selon la revendication 12 dans lequel la couche d'EVOH (3) comprend en poids de 70 à 95% d'EVOH pour respectivement 30 à 5% d'EPR greffé.

14. Tube selon l'une quelconque des revendications précédentes dans lequel, dans la couche (4), les polyoléfines de la phase dispersée peuvent être des LLDPE, des PE, des EPR, des EPDM, qui sont fonctionnalisées en tout ou partie.

15. Tube selon l'une quelconque des revendications 1 à 14 dans lequel la matrice PA 6 représente de 50 à 85% en poids pour respectivement 50 à 15% de phase dispersée.

16. Tube selon la revendication 15 dans lequel la matrice PA 6 représente de 55 à 80% en poids pour respectivement 45 à 20% de phase dispersée.

17. Tube selon la revendication 14 dans lequel les mélanges de PA 6 et de polyoléfine à matrice PA 6 comprennent, le total étant 100% :
de 50 à 90% de PA 6,
de 1 à 35% de PEHD,
de 1 à 30% d'au moins un polymère P1 choisi parmi les modifiants chocs
et les polyéthylènes,
l'un au moins du PEHD et de P1 étant fonctionnalisé en tout ou partie.

18. Tube selon la revendication 17 dans lequel les mélanges de PA 6 et de polyoléfine à matrice PA 6 comprennent, le total étant 100% :
de 60 à 80% de PA 6,
de 10 à 30% de PEHD,
de 5 à 25% d'au moins un polymère P1 choisi parmi les modifiants chocs
et les polyéthylènes,
l'un au moins du PEHD et de P1 étant fonctionnalisé en tout ou partie.

19. Utilisation des tubes selon l'une quelconque des revendications précédentes pour le transport d'essence.
